# EUROPEAN PATENT SPECIFICATION

(11) **EP 0 661 249 B1**
(45) Date of publication and mention of the grant of the patent: **01.07.1998**
(21) Application number: 94302441.4
(22) Date of filing: 06.04.1994
(51) Int. Cl.: C05B 3/00, C05G 3/00

(54) **Growth promoter for aquatic plant and method for application thereof**
Wachstumpromoter für Wasserpflanzen und Verfahren zur dessen Verwendung
Promoteur de croissance pour des plantes aquatiques et sa méthode d'application

(30) Priority: 29.12.1993 JP 353778/93
(43) Date of publication of application: 05.07.1995
(73) Proprietor: JAPAN PET DRUGS CO., LTD., Katsushika-Ku, Tokyo (JP)
(72) Inventor: Yoshida, Nobuyuki, c/o Japan Pet Drugs Co. Ltd., Tokyo (JP)
(74) Representative: Woods, Geoffrey Corlett

(56) References cited:
- DE-A- 3 215 958
- US-A- 3 197 302
- US-A- 5 146 870
- DATABASE WPI Section Ch, Week 8705 Derwent Publications Ltd., London, GB; Class C04, AN 87-033973 & JP-A-61 291 482 (YOKOYAMA T) , 22 December 1986
- DATABASE WPI Section Ch, Week 9036 Derwent Publications Ltd., London, GB; Class C04, AN 90-272053 & JP-A-02 192 485 (ABA KK) , 30 July 1990

## Description

The present invention relates to a method for promoting the growth of aquatic plants which increases the carbonate ion concentration in a water tank with aquatic plants therein (e.g., a fish tank or aquarium) up to a concentration which promotes the growth of the aquatic plants, which thereby activates the photosynthesis of the aquatic plants.

It is known that the optimum carbonate ion concentration for the growth of aquatic plants is 15 to 16 ppm. However, tap water and underground water, for example, generally have a carbonate ion concentration of 4 to 6 ppm. To promote the growth of aquatic plants it is effective to increase the carbonate ion concentration in the water. For increasing the carbonate ion concentration, there is known a method in which carbon dioxide is gradually introduced into the water from a container filled with carbon dioxide. Problems with this method are that additional equipment such as the above container is required and that the handling of such equipment is complicated. Another problem with the above method is that since carbon dioxide gas rapidly rises upwards in water, the effect on the growth of aquatic plants is not as good as expected. Furthermore, when the equipment is handled carelessly, all the carbon dioxide may be released at once, which alters the aquatic environment. As a result, fish, kept together with the aquatic plants may be harmed.

The present invention provides the a method for promoting the growth of aquatic plants in a water tank by converting the carbonates and bicarbonates present as permanent hardness components in water in said tank to phosphates and by using the carbonate and bicarbonate ions formed as a source of a carbonate component for the promotion of growth of said aquatic plants, which comprises placing (a) an alkali metal salt or ammonium salt of orthophosphoric acid and (b) an alkali metal salt or ammonium salt of polyphosphoric, metaphosphoric or pyrophosphoric acids, in effective amounts in said tank.

In the present invention the carbonate ion concentration in water in a water tank is increased, thereby promoting the growth of aquatic plants.

The first phosphate used in the present invention is a primary alkali metal or ammonium salt of orthophosphoric acid (M¹H₂PO₄), secondary alkali metal or ammonium salt of orthophosphoric acid (M¹₂HPO₄) or tertiary alkali metal or ammonium salt of orthophosphoric acid (M¹₃PO₄). The second phosphate is an alkali metal or ammonium polyphosphate (M¹ₙ₊₁PₙO₃ₙ₊₁), metaphosphate ((M¹PO₃)ₙ) or pyrophosphate acid salt (M¹₂H₂P₃O₇). In the above chemical formulae, M¹ is an alkali metal such as sodium or potassium, or ammonium.

Carbonate ions dissolved in water form carbonates or bicarbonates with metal ions in the water. The metal ions include alkali metal and alkaline earth metal ions. In the present invention, the carbonate is brought into a state where carbonate ions can be easily released by chelating the alkaline earth metal ions with phosphate, i.e., masking the alkaline earth metal ions of the carbonate or bicarbonate. The orthophosphoric acid salts, including primary, secondary and tertiary salts of orthophosphoric acid, used in the present invention forms a sparingly soluble salt with alkaline earth metals to mask the alkaline earth metals. The polyphosphate, metaphosphate and pyrophosphates used in the present invention form a water-soluble complex with alkaline earth metals to mask the alkaline earth metals. In view of the appearance of the water tank a phosphate which forms a water-soluble complex is used. A phosphate which forms a sparingly soluble salt can be used together with the phosphate which forms a water-soluble complex, since, in this case, the amount of precipitate is small.

Calcium or magnesium, which form carbonates or bicarbonates when in the form of metal ions, are hardness components and are contained in water. Furthermore, when living organisms such as plants and fish are present, calcium and magnesium are also contained in their food and excretions. The metal ions are present as a carbonate hardness component or a non-carbonate hardness component. The non-carbonate hardness component is present in the form of a sulfate or chloride. Since a large amount of carbon dioxide in air is dissolved in the water, the carbonate hardness component is present in a larger amount.

The chelating effect of the phosphate on the carbonate hardness component is as follows when the phosphate is a tertiary salt of orthophosphoric acid: ${\text{3Ca(HCO}}_{\text{3}} {\text{)}}_{\text{2}} {\text{+ 2Na}}_{\text{3}} {\text{PO}}_{\text{4}} {\text{→ Ca}}_{\text{3}} {\text{(PO}}_{\text{4}} {\text{)}}_{\text{2}} {\text{+ 6NaHCO}}_{\text{3}}$${\text{3Mg(HCO}}_{\text{3}} {\text{)}}_{\text{2}} {\text{+ 2Na}}_{\text{3}} {\text{PO}}_{\text{4}} {\text{→ Mg}}_{\text{3}} {\text{(PO}}_{\text{4}} {\text{)}}_{\text{2}} {\text{+ 6NaHCO}}_{\text{3}}$${\text{3CaCO}}_{\text{3}} {\text{+ 2Na}}_{\text{3}} {\text{PO}}_{\text{4}} {\text{→ Ca}}_{\text{3}} {\text{(PO}}_{\text{4}} {\text{)}}_{\text{2}} {\text{+ 3Na}}_{\text{2}} {\text{CO}}_{\text{3}}$${\text{3MgCO}}_{\text{3}} {\text{+ 2Na}}_{\text{3}} {\text{PO}}_{\text{4}} {\text{→ Mg}}_{\text{3}} {\text{(PO}}_{\text{4}} {\text{)}}_{\text{2}} {\text{+ 3Na}}_{\text{2}} {\text{CO}}_{\text{3}}$

The carbonate, sulfate, nitrate and chloride of calcium or magnesium are sparingly soluble, and are present as permanent hardness components, while the sodium salts of carbonic acid or bicarbonic acid are water-soluble, and are present as free carbonates.

The present invention seeks to convert the carbonate and bicarbonates present as permanent hardness components to phosphates and to use the carbonate and bicarbonate ions formed as a source of a a carbonate component for the promotion of growth of aquatic plants.

In free carbonates in water, carbonate and bicarbonate ions maintain a quantitative equilibrium state depending upon the pH. When carbonate ions are absorbed into plants, bicarbonate ions are converted to carbonate ions. When carbonate ions and bicarbonate ions are in an equilibrium state, and when the pH is 6.5 or less, the amount of carbonate ions is larger than the amount of bicarbonate ions. The optimum pH for freshwater aquarium fish is about 6.8. To maintain a pH of about 6.8, a plurality of phosphates may be used in combination to impart the growth promoter with a pH buffer capability.

An aqueous solution or dispersion of the agent may be placed in a container having at least one narrow opening. The container is then placed in water in a water tank thereby to allow the phosphates to pass through the opening into the water.

The form of the above "container" is not specially limited. It is preferred to use a container having a proper volume, having the form of, or a form similar to the form of, for example, an ampoule to be filled with an injection solution, and having at least one narrow opening. The container may have at least one narrow opening in any place on the container, for example at one terminal end.

The growth promoter is placed in the above container, and the growth promoter is allowed to ooze through the narrow opening. This container may be horizontally, vertically or obliquely positioned in a water tank, since the growth promoter easily oozes through the narrow opening due to a difference between the concentration within the container and the concentration outside the container. For allowing the growth promoter to ooze easily, it is preferred to position the container in a water tank such that the narrow opening faces downward. The container may contain not only the growth promoter but also a water-soluble or water-dispersible fertilizer.

The growth promoter for aquatic plants used in the present invention chelates sparingly soluble carbonate in water to convert it into advantageous carbonate, which carbonate can be used for the promotion of growth of aquatic plants.

The growth promoter may be gradually released into the water, whereby the change of an environment in water proceeds only gradually. In this way fish such as aquarium fish which are often kept together with aquatic plants are not harmed.

The present invention will now be further described in the following Examples. In the Examples percentages are by weight unless otherwise specified.

### Example 1

Three water tanks having a size of 60 x 36 x 30 cm were each filled with 55 liters of water, and the following test conditions were set:
Tank A: A container containing 30 ml of an aqueous solution containing 3 % of primary potassium phosphate, 6 % of secondary sodium phosphate and 10 % of sodium metaphosphate was placed in the first water tank such that the narrow open end of the container faced downwards.
Tank B: 400 milliliters of carbon dioxide gas was dissolved in the water of a second tank once a day by releasing the carbon dioxide into a cylindrical diffuser having a diameter of 6 cm and a height of 17 cm, which had an opening facing downward. The dissolved carbonate gradually diffused through the lower portion of the diffuser into the water in the water tank. The release of carbon dioxide was carried out at 9:30 am every day. The pH of the water in each tank was measured at 4:30 pm every day.
Tank C: A third tank was filled with water alone.

The temperature of the water in each tank was set at 25 to 28°C, and, as aquatic plants, 10 pieces of Cabomba Caroliniana having a height of approximately 15 to 20 cm and 10 pieces of Ludwigis Repens having a height of approximately 10 to 12 cm were placed in each tank. The water in each tank was filtered through an air-lift filter, and exposed to two 20 W fluorescent lamps for plant growth for 10 hours per day. The water in each tank was measured for dissolved carbonate concentration, pH and total hardness. Table 1 shows the results. In each tank, for evaluating the degrees of growth of the aquatic plants, the heights of the aquatic plants were measured excluding the lengths of their root portions 14 days after the test was initiated. Table 2 shows the results, in which the figures show the numbers of aquatic plants having the heights shown in a left column.

**Table 1**

| | 0 | 1 | 2 | 3 | 4 | 5 | 6 | 7 (days) |
|---|---|---|---|---|---|---|---|---|
| Tank A | | | | | | | | |
| pH | 7.8 | 7.3 | 7.5 | 7.6 | 7.6 | 7.6 | 7.7 | 7.6 |
| Dissolved carbonate concentration | 4 | 18 | 18 | 18 | 18 | 18 | 16 | 16 |
| Total hardness | 75 | 65 | 65 | 65 | 65 | 65 | 65 | 65 |

| Tank B | | | | | | | | |
|---|---|---|---|---|---|---|---|---|
| pH | 7.8 | 7.4 | 7.5 | 7.6 | 7.5 | 7.4 | 7.3 | 7.5 |
| Dissolved carbonate concentration | 4 | 6 | 6 | 6 | 6 | 6 | 6 | 6 |
| Total hardness | 75 | 70 | 70 | 70 | 70 | 70 | 70 | 70 |

| Tank C | | | | | | | | |
|---|---|---|---|---|---|---|---|---|
| pH | 7.8 | 7.8 | 7.8 | 8.1 | 8.1 | 7.8 | 7.8 | 8.0 |
| Dissolved carbonate concentration | 4 | 4 | 4 | 4 | 4 | 4 | 4 | 4 |
| Total hardness | 75 | 74 | 74 | 75 | 75 | 75 | 75 | 75 |
| Notes: Unit of dissolved carbonate concentration: ppm Unit of total hardness: ppm | | | | | | | | |

**Table 1 (continued)**

| | 8 | 9 | 10 | 11 | 12 | 13 | 14 (days) |
|---|---|---|---|---|---|---|---|
| Tank A | | | | | | | |
| pH | 7.6 | 7.5 | 7.5 | 7.6 | 7.6 | 7.5 | 7.5 |
| Dissolved carbonate concentration | 16 | 16 | 16 | 16 | 16 | 16 | 16 |
| Total hardness | 65 | 65 | 65 | 65 | 65 | 65 | 65 |

| Tank B | | | | | | | |
|---|---|---|---|---|---|---|---|
| pH | 7.7 | 7.7 | 7.8 | 7.9 | 8.1 | 8.0 | 8.0 |
| Dissolved carbonate concentration | 6 | 6 | 6 | 6 | 6 | 6 | 6 |
| Total hardness | 70 | 70 | 70 | 70 | 70 | 70 | 70 |

| Tank C | | | | | | | |
|---|---|---|---|---|---|---|---|
| pH | 7.9 | 7.9 | 8.0 | 8.1 | 8.0 | 7.9 | 7.9 |
| Dissolved carbonate concentration | 4 | 4 | 4 | 4 | 4 | 4 | 4 |
| Total hardness | 75 | 75 | 75 | 75 | 75 | 75 | 75 |
| Notes: Unit of dissolved carbonate concentration: ppm Unit of total hardness: ppm | | | | | | | |

**Table 2**

| | Height of Cabomba Caroliniana (cm) | | |
|---|---|---|---|
| | Tank A | Tank B | Tank C |
| 15 - 20 cm | 0 | 1 | 5 |
| 21 - 25 cm | 3 | 8 | 5 |
| 26 - 30 cm | 7 | 1 | 0 |

**Table 2 (continued)**

| | Height of Ludwigis Repens (cm) | | |
|---|---|---|---|
| | Tank A | Tank B | Tank C |
| 10 - 12 cm | 0 | 2 | 1 |
| 13 - 15 cm | 6 | 5 | 8 |
| 16 - 18 cm | 4 | 3 | 1 |

In tank A in which the growth promoter of the present invention was added, the pH was relatively stable for 14 days in a state in which the pH was decreased. Further, the total hardness was also stable for 14 days in a state in which it was lower than that found before the growth promoter was added. Furthermore, the dissolved carbonate concentration was stable for 14 days, i.e., it was 16 to 18 ppm. Moreover, as compared with the other tanks, a remarkable growth of the aquatic plants was observed. When changes in water quality, such as a change in the pH, were measured every hour, it was found that the water quality changed only gradually. This shows that the environmental influence of the growth promoter on fish can be minimized.

### Example 2

Changes in water quality were studied in the same manner as in Example 1 except that the amounts of phosphates added to tanks were changed as shown below (tanks D and E).

| | Tank D | Tank E |
|---|---|---|
| Sodium metaphosphate | 3 % | 10 % |
| Secondary sodium phosphate | 6 % | 9 % |
| Primary potassium phosphate | 10 % | 0 % |

Further, carbon dioxide gas was introduced in the same manner as in Example 1 (tank F), and a tank was filled with water alone (tank G).

The results are shown in Table 3.

**Table 3**

| | 0 | 1 | 2 | 3 | 4 | 5 | 6 | 7 (days) |
|---|---|---|---|---|---|---|---|---|
| Tank D | | | | | | | | |
| pH | 8.1 | 7.4 | 7.6 | 7.8 | 7.7 | 7.6 | 7.8 | 7.8 |
| Dissolved carbonate concentration | 4 | 16 | 16 | 14 | 14 | 14 | 14 | 12 |
| Total hardness | 80 | 70 | 70 | 70 | 70 | 75 | 75 | 75 |

| Tank E | | | | | | | | |
|---|---|---|---|---|---|---|---|---|
| pH | 8.1 | 7.5 | 7.7 | 7.9 | 7.9 | 7.8 | 8.0 | 7.9 |
| Dissolved carbonate concentration | 4 | 10 | 10 | 8 | 8 | 8 | 8 | 8 |
| Total hardness | 80 | 70 | 70 | 70 | 70 | 75 | 75 | 75 |

| Tank F | | | | | | | | |
|---|---|---|---|---|---|---|---|---|
| pH | 8.1 | 8.0 | 7.8 | 7.9 | 7.8 | 8.0 | 7.9 | 7.9 |
| Dissolved carbonate concentration | 4 | 6 | 6 | 6 | 6 | 6 | 6 | 6 |
| Total hardness | 80 | 80 | 80 | 80 | 80 | 80 | 80 | 80 |

| Tank G | | | | | | | | |
|---|---|---|---|---|---|---|---|---|
| pH | 8.1 | 8.0 | 8.0 | 8.1 | 8.2 | 8.2 | 8.2 | 8.1 |
| Dissolved carbonate concentration | 4 | 4 | 4 | 2 | 2 | 2 | 2 | 2 |
| Total hardness | 80 | 80 | 80 | 80 | 80 | 80 | 80 | 80 |
| Notes: Unit of dissolved carbonate concentration: ppm Unit of total hardness: ppm | | | | | | | | |

**Table 3 (continued)**

| | 8 | 9 | 10 | 11 | 12 | 13 | 14 (days) |
|---|---|---|---|---|---|---|---|
| Tank D | | | | | | | |
| pH | 7.7 | 7.7 | 7.7 | 7.7 | 7.8 | 7.7 | 7.7 |
| Dissolved carbonate concentration | 12 | 12 | 12 | 12 | 12 | 12 | 12 |
| Total hardness | 75 | 75 | 75 | 75 | 75 | 75 | 75 |

| Tank E | | | | | | | |
|---|---|---|---|---|---|---|---|
| pH | 7.8 | 7.8 | 7.9 | 7.8 | 7.9 | 7.8 | 7.8 |
| Dissolved carbonate concentration | 8 | 8 | 8 | 8 | 8 | 8 | 8 |
| Total hardness | 75 | 75 | 75 | 75 | 75 | 75 | 75 |

| Tank F | | | | | | | |
|---|---|---|---|---|---|---|---|
| pH | 8.0 | 7.9 | 7.8 | 7.9 | 7.7 | 7.9 | 7.9 |
| Dissolved carbonate concentration | 6 | 6 | 6 | 6 | 6 | 6 | 6 |
| Total hardness | 80 | 80 | 80 | 80 | 80 | 80 | 80 |

| Tank G | | | | | | | |
|---|---|---|---|---|---|---|---|
| pH | 8.1 | 8.1 | 8.2 | 8.2 | 8.1 | 8.0 | 8.1 |
| Dissolved carbonate concentration | 2 | 2 | 2 | 2 | 2 | 2 | 2 |
| Total hardness | 80 | 80 | 80 | 80 | 80 | 80 | 80 |
| Notes: Unit of dissolved carbonate concentration: ppm Unit of total hardness: ppm | | | | | | | |

In each of tanks D and E, the dissolved carbonate concentration was from 8 to 16 ppm, and the carbonate concentration was maintained in the range suitable for growing aquatic plants.

## Claims

1. A method for promoting the growth of aquatic plants in a water tank by converting the carbonates and bicarbonates present as permanent hardness components in water in said tank to phosphates and by using the carbonate and bicarbonate ions formed as a source of a carbonate component for the promotion of growth of said aquatic plants, which comprises placing (a) an alkali metal salt or ammonium salt of orthophosphoric acid and (b) an alkali metal salt or ammonium salt of polyphosphoric, metaphosphoric or pyrophosphoric acids, in effective amounts in said tank.

2. A method according to claim 1, wherein the alkali metal salts are sodium or potassium salts.

3. A method according to claim 2 where an agent containing primary potassium phosphate, secondary sodium phosphate and sodium metaphosphate is placed in said task.

4. A method according to any one of the preceding claims, which comprises placing an aqueous solution or dispersion of the agent in a container having at least one opening, and placing the container in water in said tank thereby to allow the phosphate to pass through the opening into the water.

5. A method according to claim 4, wherein the agent is allowed to diffuse through a narrow opening at one terminal end of the container.

6. A method according to claim 4 or 5, wherein the container is placed in the tank such that the opening opens downwards.

## Patentansprüche

1. Verfahren zum Fördern des Wachstums von Wasserpflanzen in einem Wassertank durch Umwandeln der als Resthärte-Komponenten im Wasser in diesem Tank vorhandenen Carbonate und Bicarbonate zu Phosphaten und durch Verwenden der entstandenen Carbonat- und Bicarbonat-Ionen als eine Quelle einer Carbonat-Komponente zur Förderung des Wachstums dieser Wasserpflanzen, welches das Einbringen (a) eines Alkalimetallsalzes oder Ammoniumsalzes von Orthophosphorsäure und (b) eines Alkalimetallsalzes oder Ammoniumsalzes von Polyphosphor-, Metaphosphor- oder Pyrophosphorsäuren in wirksamen Mengen in diesen Tank umfaßt.

2. Verfahren nach Anspruch 1, wobei die Alkalimetallsalze Natrium- oder Kaliumsalze sind.

3. Verfahren nach Anspruch 2, bei welchem ein Agens, enthaltend primäres Kaliumphosphat, sekundäres Natriumphosphat und Natriummetaphosphat in diesem Tank eingebracht wird.

4. Verfahren nach einem der vorangehenden Ansprüche, welches das Einbringen einer wässrigen Lösung oder Dispersion des Agens in einen Behälter mit mindestens einer Öffnung und das Einbringen des Behälters in Wasser in diesem Tank umfaßt, wobei der Durchtritt des Phosphats durch die Öffnung in das Wasser ermöglicht wird.

5. Verfahren nach Anspruch 4, wobei die Diffusion des Agens durch eine enge Öffnung an einem Ende des Behälters ermöglicht wird.

6. Verfahren nach Anspruch 4 oder 5, wobei der Behälter derart in den Tank eingebracht wird, daß sich die Öffnung nach unten öffnet.

## Revendications

1. Procédé pour promouvoir la croissance des plantes aquatiques dans un réservoir d'eau par conversion des carbonates et bicarbonates présents en tant que composants permanents de dureté dans l'eau dudit réservoir, en phosphates et par l'utilisation des ions carbonates et bicarbonates formés comme source de composés carbonates pour promouvoir la croissance desdites plantes aquatiques, ce procédé consistant à introduire dans ledit réservoir en des quantités efficaces (a) un sel de métal alcalin ou d'ammonium d'acide orthophosphorique et (b) un sel de métal alcalin ou d'ammonium d'acides polyphosphorique, métaphosphorique ou pyrophosphorique.

2. Procédé selon la revendication 1, dans lequel les sels de métal alcalin sont ceux de sodium ou de potassium.

3. Procédé selon la revendication 2, dans lequel on place dans ledit réservoir un agent contenant du phosphate de potassium primaire, du phosphate de sodium secondaire et du métaphosphate de sodium

4. Procédé selon l'une quelconque des revendications précédentes, qui consiste à placer une solution aqueuse ou une dispersion de l'agent dans un container ayant au moins une ouverture et à introduire le container dans l'eau dudit réservoir permettant ainsi au phosphate de passer dans l'eau à travers l'ouverture.

5. Procédé selon la revendication 4, dans lequel on fait diffuser l'agent à travers une ouverture étroite à l'une des extrémités du container.

6. Procédé selon la revendication 4 ou 5, dans lequel le container est placé dans le réservoir de telle sorte que l'ouverture soit dirigée vers le bas.
